(19) Europäisches Patentamt
European Patent Office
Office européen des brevets

(11) **EP 0 648 531 B1**

(12) **EUROPEAN PATENT SPECIFICATION**

(45) Date of publication and mention
of the grant of the patent:
**07.04.1999 Bulletin 1999/14**

(51) Int. Cl.$^6$: **B01J 19/10**, B06B 3/00

(21) Application number: **94307558.0**

(22) Date of filing: **14.10.1994**

(54) **Fluid processing**

Fluidbehandlungsverfahren

Traitement de fluide

(84) Designated Contracting States:
**AT BE CH DE FR LI**

(30) Priority: **16.10.1993 GB 9321421**

(43) Date of publication of application:
**19.04.1995 Bulletin 1995/16**

(73) Proprietor:
**W.S. Atkins Consultants Limited
Epson, Surrey KT18 5BW (GB)**

(72) Inventor:
**Rawson, Francis F. H., Dr.
Queniborough, Leicestershire LE7 3FP (GB)**

(74) Representative:
**Lally, William et al
FORRESTER & BOEHMERT
Franz-Joseph-Strasse 38
80801 München (DE)**

(56) References cited:
**WO-A-82/03795            WO-A-92/12790**

Printed by Xerox (UK) Business Services
2.16.7/3.6

## Description

Description of the Invention

This invention is concerned with improvements relating to fluid processing, and in particular to the application of high frequency (particularly ultrasonic) energy to fluids.

In a variety of liquid chemical processes reaction efficiency is improved by the application of ultrasonic energy to the liquids in a process commonly referred to as "sonochemistry". Conventionally used is a longitudinally vibrating probe which is inserted into a reaction vessel, or through which reaction liquids are fed. Difficulty is encountered in conventional devices in increasing the level at which energy is transferred to the liquid, and in general an emerging density limit of between 30 and 50 watts/litre is regarded as a practical limit for the known devices. Attempts to increase the energy input beyond this level causes decoupling to occur, and/or the generation of vapour at the interface between the vibrating surface of the device and the liquid, and it is one of the various objects of this invention to provide a fluid processing device enabling a higher energy input to be achieved, and/or a higher frequency of energy to be input, and/or a conventional level of energy as regards both input level and frequency to be input more conveniently.

For example, there is disclosed in WO92/12790 an ultrasonic processing device in which liquid to be processed is fed through an axial bore 14, and ultrasonic transducer causes the circumferential walls defining the bore to vibrate in the radial plane, causing the bore to increase and decrease in diameter at ultrasonic frequency. A similar arrangement is shown in WO82/03795.

In both of these documents, the amount of ultrasonic energy which is applied to the liquid as it flows through the processing device is limited.

Conversely, it is one of the various objects of this invention to provide a liquid processing device by which significantly higher energy input at ultrasonic frequency may be applied to the liquid being treated, than has here to for been possible.

The invention has been devised in relation to a processing device for applying ultrasonic energy to a liquid system, in which context the invention will hereinafter be described in detail. It is however to be appreciated that the principles of the invention could be applied where similar requirements are encountered in gaseous systems, or liquid/gaseous systems, and for convenience the term "fluid" as used hereinafter is to be understood, where the context permits, as including both gaseous systems and liquid/gaseous systems. Similarly the invention may be utilised in viscous liquid systems such as molten plastics materials, slurries and the like, and the term "liquid" is also to be understood as embracing such materials.

According to this invention there is provided a liquid processing device comprising a chamber through which liquid to be processed may be fed, and an operating member have a circular cross section in the chamber, the operating member comprising a plurality of surfaces including at least one exterior circumferential surface, the device comprising means to cause said surfaces to vibrate at an ultrasonic frequency, and said exterior circumferential surface to vibrate radially, and means to permit fluid to be treated to flow over said surfaces.

Said surfaces may comprise an internal (concave) surface, e.g. the surface of a bore through which fluid to be treated is fed, and/or an exterior (convex) surface over which the fluid is fed, and/or a flat (planar) surface, in each case the mode of vibration being a "pulsating", or alternate radial expansion and contraction of the surface.

Advantageously said surfaces comprise a surface which vibrates in a radial plane which extends at right angles to a direction of flow of fluid through the device.

Preferably the operating member comprises one or more annular members connected or secured together to which a source of vibration at ultrasonic frequency is attached, the construction and arrangement being such that said vibrations cause the annular members to radially expand and contract at said ultrasonic frequency.

The source of vibration may be applied to the annular member or members in the radial direction, or in an axial direction, the construction and arrangement being such that said vibrations emanate as radial vibrations.

Where said surface is an exterior surface, the vibrating member may be vibrated at ultrasonic frequency both in a radial mode and in an axial mode.

There will now be given detailed descriptions, to be read with reference to the accompanying drawings, of various fluid processing devices which have been selected for the purposes of illustrating the invention by way of example.

In the accompanying drawings:-

Figures 1 to 3a are schematic representations of four sonic fluid processors which may be used in the practice of the invention; and
Figures 4, 5, 6 and 7 are schematic views of four specific embodiments of the invention.

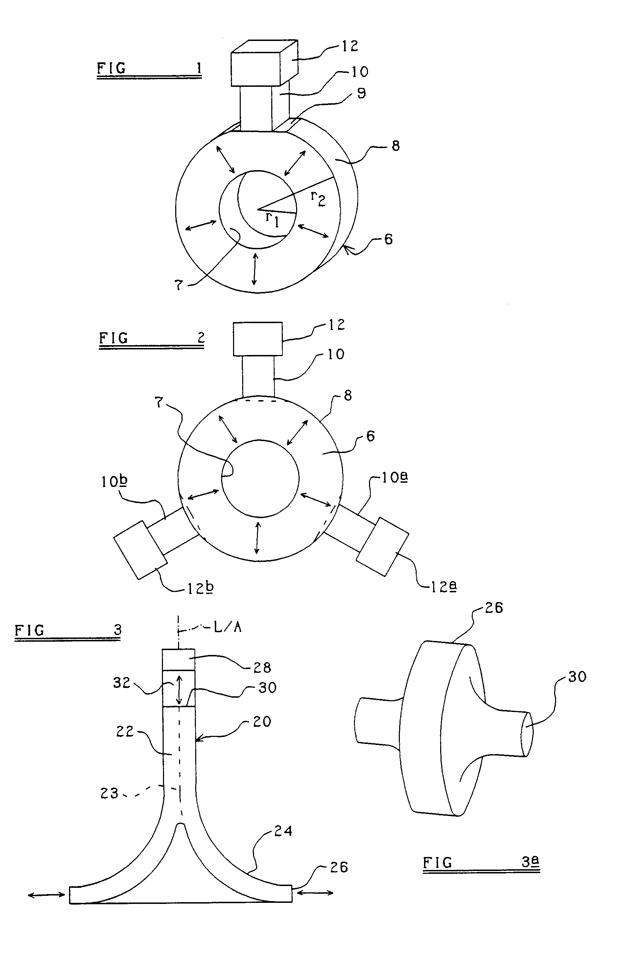

The liquid processing device which is the first embodiment of the invention comprises an operating member shown in Figure 1, provided by an annular member 6 having an internal circumferential surface 7 and an external circumferential surface 8, part of which is ground flat at 9 and has attached thereto a transducer 10. Power means 12 is operative to cause the transducer 10 to vibrate at ultrasonic frequency, said vibrations being applied to the member 6 through the surface 9.

The annular member 6 has an internal radius r1 and an external radius r2, the relationship between which is such that

$$\frac{r1 + r2}{2} = k\lambda,$$

where k is an integer, and $\lambda$ being the wavelength of the vibrations applied by the transducer 10 the member 6.

In this configuration, the outer surface 8 and the inner surface 7 alternately radially expand and contract in a "pulsating" manner. The device may be utilised to apply ultrasonic energy to a liquid by immersing the member 6 in the liquid to be treated, such that energy is applied to the liquid by both the interior and exterior circumferential surfaces.

The liquid processing device which is the second embodiment of this invention comprises an operating member which is similar to the operating member illustrated in Figure 1, and similar numerals have been utilised to indicate similar parts. In the second embodiment, further transducers 10a and 10b are applied to the outer surface 8 of the member 6, spaced circumferentially at 120 degrees on either side of the transducer 10. In this way energy may be applied by the device at a higher rate. Alternatively other numbers of transducers may be utilised, conveniently being spaced uniformly around the circumference.

The liquid processing device which is the third embodiment comprises an operating member illustrated in Figure 3, having an ultrasonic horn 20 comprising a generally cylindrical body 22, which extends to an outwardly-flared or bell-shaped region 24, terminating in a circumferential flange having a circumferentially outer surface 26. An ultrasonic transducer 28 applies vibrational energy in an axial direction to a flat surface 30 of the horn 20, a booster 32 being interposed between the transducer 28 and the surface 30. The distance along the dotted line 23 from the surface 30 to the surface 26 equals $\frac{k\lambda}{2}$, k and $\lambda$ having the values ascribed above. In this configuration vibrations of the surface 30 in the axial direction emanate as vibrations of the surface 26 in the radial direction, i.e. in a plane extending at right angles to the longitudinal axis, the surface 26 alternately expanding and contracting. When the device illustrated in Figure 3 is immersed in liquid to be treated, a high degree of energy input is provided.

Alternatively as shown in Figure 3a a solid of rotation may be utilised.

The fourth embodiment illustrated in Figure 4 utilises two of the Figure 3 operating members in tandem, the circular flanges 24a and 24b of the two members being mounted in opposition, and being connected together by bolts 34 located at spaced positions around the circumference of the flange 24. Discs 36 are mounted on the bolts 34, held apart by tubular spacers 38. Each disc 36 has a circular central aperture 40, the relationship between the radius r1 of which and the outer radius r2 being determined by the equation

$$\frac{r1 + r2}{2} = \frac{k\lambda}{2},$$

k in this equation being an odd integer. In this arrangement the outer surfaces 26a and 26b of the flanges 24a and 24b vibrate in the radial plane, as the embodiment in Figure 3, and this causes the members 36 to vibrate similarly, the outer circumference 37 of which alternately expanding and contracting. The two transducers 28a and 28b are driven synchronously, to ensure that expansion and contraction forces are applied in phase.

The device which is the fourth embodiment of the invention may be immersed in a treatment chamber 40, through which liquid to be treated may be flowed, and by which ultrasonic energy may be applied.

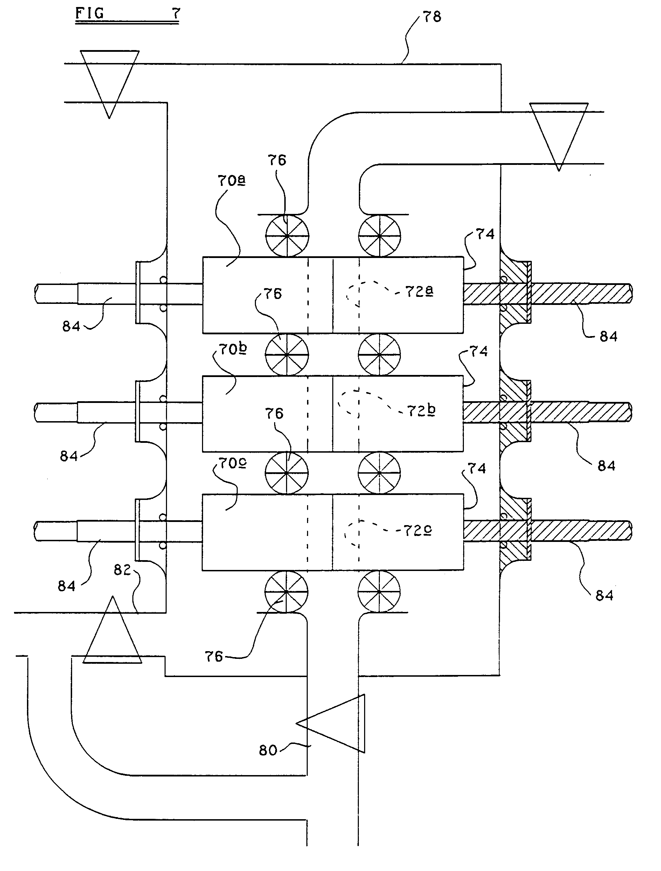

In the fifth embodiment a one-piece operating member 50 is utilised, being formed with end faces 52a, 52b, which lie in planes extending at right angles to a longitudinal axis L/A, which are attached respectively to transducers 54a, 54b through the intermediary of boosters 56a, 56b. In the arrangement illustrated in Figure 5, vibrations transmitted to the member 50 on the longitudinal axis emanate as vibrations from circumferential surfaces 58a, 58b, 58c separated from one another by $\frac{n\lambda}{2}$.

As with the fourth embodiment the operating member is conveniently located within a tank 40 through which fluid to be treated is to be fed.

The liquid processing device illustrated in Figure 6 is similar to that illustrated in Figure 5, but a drive for the vibrating member is provided by a transducer 60 operating through a booster 62 attached to the circumferential surface 58b. Under such circumstances, vibrations will also emanate from the axial planes 52a, 52b.

Of course if desired drives for the vibrating member 50 may be afforded by a combination of axial anti radial plane drives.

Alternatively or in addition fluid to be treated may be fed through an axial bore extending through the devices shown in Figures 5 and 6, or if desired cooling fluid may be fed through one of the flow pathways.

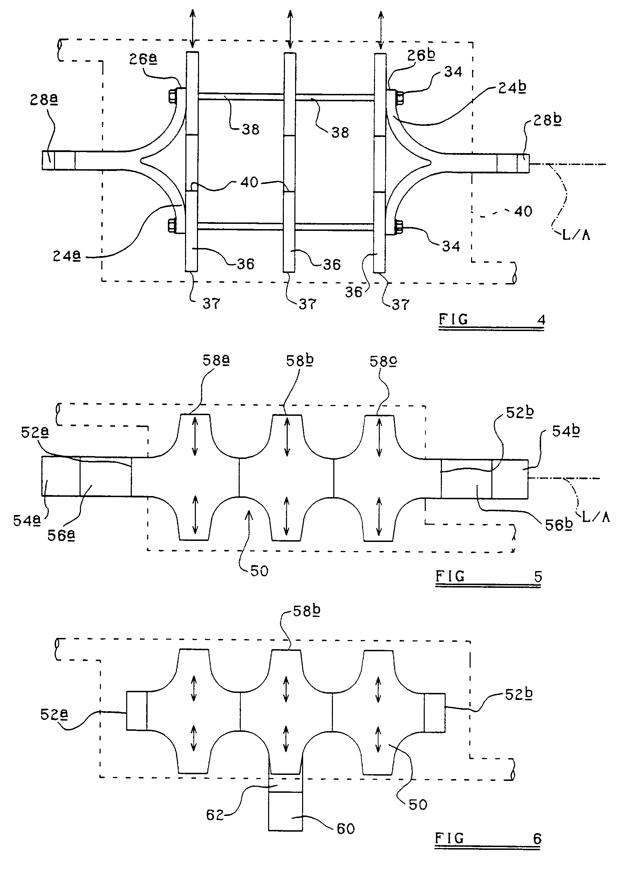

The preferred embodiment of the invention, illustrated in Figure 7, is based on the arrangement disclosed in Figure 2, comprising three vibrating members 70a, 70b, 70c, in the form of cylindrical members having an axial bores 72a, 72b, 72c, respectively, flats 74 being provided in the outer circumferential surface of the members at three positions spaced circumferentially thereof. The three vibrating members 70a are clamped together with seals 76 therebetween around the axial bores 72, and the arrangement is located within a treatment chamber 78 having a first inlet 80 aligned with the axial bores 72 of the vibrating members, and a second inlet 82 extending around the outside of the vibrating members.

Transducers 84 are applied to the flat surfaces 74 in the same way as shown in Figure 2, to cause the vibrating members to vibrate in a radial mode, i.e. in which the inner and outer radii increase and decrease at a high frequency in a "pulsating" manner. Conveniently the fluid to be treated flows through the device through the primary inlet 80, cooling fluid being flowed if desired through the second inlet 82.

Alternatively this may be reversed, or if desired fluid to be treated may be passed through the device through both inlets.

## Claims

1. A liquid processing device comprising a chamber (40) through which liquid to be processed may be fed, and an operating member (6, 22, 24, 50, 70) have a circular cross section in the chamber, the operating member comprising a plurality of surfaces (7,8: 26,37: 40,58: 72,74) including at least one exterior circumferential surface, the device comprising means (10, 28, 54, 60, 84) to cause said surfaces to vibrate at an ultrasonic frequency, and said exterior circumferential surface to vibrate radially, and means to permit fluid to be treated to flow over said surfaces.

2. A device according to Claim 1 comprising a plurality of circumferential surfaces.

3. A device according to Claim 2 wherein said circumferential surfaces comprise an interior circumferential surface.

4. A device according to Claim 2 wherein said circumferential surfaces comprise two exterior circumferential surfaces.

5. A device according to any one of the preceding claims comprising one or more annular members connected or secured together, to which a source of vibration at ultrasonic frequency is attached, the construction and arrangement being such that said vibrations cause the annular members to radially expand and contract at said ultrasonic frequency.

6. A device according to any one of the preceding claims wherein the source of vibration is applied to the annular member or members in the radial direction or in the axial direction, the construction and arrangement being such that said vibrations emanate as radial vibrations.

7. A device according to any one of the preceding claims wherein said surfaces may be vibrated at ultrasonic frequency in both a radial mode and in an axial mode.

## Patentansprüche

1. Eine Flüssigkeitsbehandlungsvorrichtung mit einer Kammer (40), durch die die zu behandelnde Flüssigkeit speisbar ist, und einem Betriebsmittel (6, 22, 24, 50, 70) mit einem kreisförmigen Querschnitt in der Kammer, wobei das Betriebsmittel mehrere Flächen (7, 8: 26, 37: 40, 58: 72, 74) einschließlich wenigstens eine äußere Umfangsfläche umfaßt, die Vorrichtungsmittel (10, 28, 54, 60, 84) zum Schwingen lassen der Flächen mit einer Ultraschallfrequenz und der äußeren Umfangsfläche zum radialen Schwingen lassen und Einrichtungen umfaßt, die das Fluid in der Weise behandeln lassen, daß des über die Flächen fließt.

2. Eine Vorrichtung nach Anspruch 1, mit mehreren Kreisumfangsflächen.

3. Eine Vorrichtung nach Anspruch 2, worin die Kreisumfangsflächen eine innere Kreisumfangsfläche umfassen.

4. Eine Vorrichtung nach Anspruch 2, worin die Kreisumfangsflächen zwei äußere Kreisumfangsflächen umfassen.

5. Eine Vorrichtung nach irgend einem der vorangehenden Ansprüche, mit einem oder mehreren miteinander verbundenen oder gesicherten ringförmigen Element(en), an derri/denen eine Ultraschallfrequenz/Schwingungsquelle angebracht ist, wobei die Konstruktion und Anordnung derart ist, daß die Schwingungen die ringförmigen Elemente mit Ultraschallfrequenz radial expandieren und kontrahieren lassen.

6. Eine Vorrichtung nach irgend einem der vorangehenden Ansprüche, worin die Schwingungsquelle in der radialen Richtung oder in der axialen Richtung an dem ringförmigen Element oder an den ringförmigen Elementen anliegt, wobei die Konstruktion und die Anordnung derart ist, daß die Schwingungen als radiale Schwingungen ausgehen.

7. Eine Vorrichtung nach irgend einem der vorangehenden Ansprüche, worin die Flächen sowohl in radialer Mode als auch in axialer Mode mit Ultraschallfrequenz in Schwingung versetzt werden können.

## Revendications

1. Dispositif de traitement de liquides comprenant une chambre (40) à travers laquelle un liquide à traiter peur être introduit, et un élément fonctionnel (6,22,24,50,70) placé dans la chambre ayant une section transversale circulaire, l'élément fonctionnel comprenant une pluralité de surfaces (7,8: 26,37: 40,58: 72,74) dont au moins une surface circonférentielle extérieure, le dispositif comprenant des moyens (10,28,54,60,84) pour entraîner lesdites surfaces à vibrer à une fréquence ultrasonique et ladite surface circonférentielle extérieure à vibrer radialement ainsi que des moyens pour permettre au fluide à traiter de circuler sur lesdites surfaces.

2. Dispositif selon la revendication 1, comprenant une pluralité de surfaces circonférentielles.

3. Dispositif selon la revendication 2, dans lequel lesdites surfaces circonférentielles comprennent une surface circonférentielle intérieure.

4. Dispositif selon la revendication 2, dans lequel lesdites surfaces circonférentielles comprennent deux surfaces circonférentielles extérieures.

5. Dispositif selon l'une quelconque des revendications précédentes comprenant un ou plusieurs éléments annulaires reliés ou fixés ensemble, auxquels une source de vibrations à fréquence ultrasonique est fixée, la construction et l'agencement étant tels que lesdites vibrations sollicitent les éléments annulaires à se dilater et à se contracter radialement à ladite fréquence ultrasonique.

6. Dispositif selon l'une quelconque des revendications précédentes dans lequel la source de vibrations est appliquée au ou aux élément(s) annulaire(s) dans la direction radiale ou dans la direction axiale, la construction et l'agencement étant tels que lesdites vibrations soient émises sous forme de vibrations radiales.

7. Dispositif selon l'une quelconque des revendications précédentes dans lequel lesdites surfaces peuvent vibrer à la fréquence ultrasonique à la fois en un mode radial et en un mode axial.

FIG    1

FIG    2

FIG    3

FIG    3a

FIG 4

FIG 5

FIG 6

FIG 7